# EUROPEAN PATENT APPLICATION

(11) **EP 4 349 874 A1**
(43) Date of publication of application: **10.04.2024**
(21) Application number: 22811304.9
(22) Date of filing: 24.05.2022
(51) Int. Cl.: C08F 4/654, C08F 2/44, C08F 10/06

(54) **OLEFIN POLYMERIZATION SOLID CATALYST COMPONENT, OLEFIN POLYMERIZATION CATALYST, MANUFACTURING METHOD FOR OLEFIN POLYMER, OLEFIN POLYMER, MANUFACTURING METHOD FOR PROPYLENE-BASED BLOCK COPOLYMER, AND PROPYLENE-BASED BLOCK COPOLYMER**

(30) Priority: 26.05.2021 JP 2021088319
(71) Applicant: TOHO TITANIUM CO., LTD., Chigasaki-shi, Kanagawa 253-8510 (JP)
(72) Inventor: FUNABASHI Hideo, Chigasaki-shi, Kanagawa 253-8510 (JP); TASHINO Kunihiko, Chigasaki-shi, Kanagawa 253-8510 (JP); OGAWA Hayashi, Chigasaki-shi, Kanagawa 253-8510 (JP); SOGA Hirokazu, Chigasaki-shi, Kanagawa 253-8510 (JP)
(74) Representative: Müller-Boré & Partner Patentanwälte PartG mbB
(86) International application number: PCT/JP2022/021191
(87) International publication number: WO 2022/250034

(57) **Abstract**

To provide a solid catalyst component for polymerization of an olefin, which can easily produce a polymer of an olefin, which is excellent in fluidity and also is high in rigidity even though the molecular weight distribution is narrow, without performing complicated polymerization treatment. A solid catalyst component for polymerization of an olefin includes magnesium, titanium and halogen, and further includes an aromatic carboxylic acid ester and a 1,3-diether compound as internal electron-donating compounds, wherein a content ratio of the titanium is 0.5 to 2.0% by mass, a content ratio of the aromatic carboxylic acid ester in a total content of the internal electron-donating compounds is 40 to 60 mol%, and a content ratio of the 1,3-diether compound in the total content of the internal electron-donating compounds is 40 to 60 mol%.

## Description

### [Technical Field]

The present invention relates to a solid catalyst component for polymerization of an olefin, a catalyst for polymerization of an olefin, a method for producing a polymer of an olefin, a polymer of an olefin, a method for producing a propylene-based block copolymer, and a propylene-based block copolymer.

### [Background Art]

In recent years, polyolefins such as polypropylene (PP) have been used in various applications such as containers and films, in addition to molded products such as automobile parts and household electric appliances.

Polypropylene-based resin compositions are used in many fields as one of the most important plastic materials, because the compositions are light in weight, excellent in moldability, also excellent in chemical stability of molded bodies such as heat resistance and chemical resistance, and also extremely excellent in cost performance. For example, polypropylene having a high stereoregularity is considered to have excellent mechanical strength, thermal properties and the like, and its application to various uses has been studied.

In order to further expand the application, there has been a demand for polypropylene having high melt flow rate (MFR), excellent moldability and also high rigidity, which can be used as a substitute for polystyrene and ABS resins.

As a method for producing such polypropylene having excellent moldability and also high rigidity, for example, Patent Literature 1 (U.S. Patent Application Publication No. 2020/0140584) discloses a production example of polypropylene using a solid catalyst component obtained by reacting diethoxymagnesium, titanium tetrachloride, di-n-propyl phthalate, and a benzylidenemalonic acid dialkyl ester and the like; and it is described that a polypropylene having a melt flow rate (MFR) of as high as 20 g/10 minutes or higher and a flexural modulus (FM) of as high as 1800 MPa or higher is obtained according to the method described in Patent Literature 1.

### [Citation List]

### [Patent Literature]

[Patent Literature 1] U.S. Patent Application Publication No. 2020/0140584

### [Summary of Invention]

### [Technical Problem]

However, it has been conventionally considered necessary to widen a molecular weight distribution by performing complicated polymerization treatment such as multistage polymerization treatment at the time of polymerization of propylene, in order to obtain a polypropylene having a flexural modulus (FM) of as high as 1800 MPa or higher; and Patent Literature 1 also discloses that a polypropylene having high rigidity has been produced by supplying propylene a plurality of times and performing polymerization to thereby widen a molecular weight distribution (Mw/Mn) that is a ratio of a weight average molecular weight (Mw) to a number average molecular weight (Mn) to 8.6 to 13.3, and a molecular weight distribution (Mz/Mw) that is a ratio of a Z-average molecular weight (Mz) to the weight average molecular weight (Mw) to 8.6 to 13.7.

Thus, it has been conventionally necessary to widen the molecular weight distribution of a polypropylene to be obtained, in order to obtain a polypropylene having high rigidity, and it has been required to use a specific solid catalyst component and perform complicated polymerization treatment.

On the other hand, polypropylene having a wide molecular weight distribution easily causes a swell when a polypropylene solution is extruded, and accordingly there has been a technical problem of difficulty in producing various grades of fiber products, for example, in a spinning process.

Under such circumstances, objects of the present invention are to provide: a solid catalyst component for polymerization of an olefin, which can easily produce a polymer of an olefin, which is excellent in fluidity and also is high in rigidity, even though the molecular weight distribution is narrow, without performing complicated polymerization treatment; and to provide a catalyst for polymerization of an olefin, a method for producing a polymer of an olefin, a polymer of an olefin, a method for producing a propylene-based block copolymer, and a propylene-based block copolymer.

### [Solution to Problem]

In order to solve the above technical problem, the present inventors have intensively studied, and as a result, have found that the above technical problem can be solved by a solid catalyst component for polymerization of an olefin, including magnesium, titanium and halogen, and also including an aromatic carboxylic acid ester and a 1,3-diether compound as internal electron-donating compounds, wherein a content ratio of the titanium is 0.5 to 2.0% by mass, a content ratio of the aromatic carboxylic acid ester in a total content of the internal electron-donating compounds is 40 to 60 mol%, and a content ratio of the 1,3-diether compound in the total content of the internal electron-donating compounds is 40 to 60 mol%; and have completed the present invention based on the present finding.

Specifically, the present invention provides:
(1) a solid catalyst component for polymerization of an olefin, including magnesium, titanium and halogen, and further including an aromatic carboxylic acid ester and a 1,3-diether compound as internal electron-donating compounds, wherein
   a content ratio of the titanium is 0.5 to 2.0% by mass,
   a content ratio of the aromatic carboxylic acid ester in a total content of the internal electron-donating compounds is 40 to 60 mol%, and
   a content ratio of the 1,3-diether compound in the total content of the internal electron-donating compounds is 40 to 60 mol%;
(2) the solid catalyst component for polymerization of an olefin according to the above (1), including the titanium, the aromatic carboxylic acid ester and the 1,3-diether compound so that a ratio represented by a total content of the aromatic carboxylic acid ester and the 1,3-diether compound / a content of the titanium is 2.0 or larger in terms of a mass ratio;
(3) the solid catalyst component for polymerization of an olefin according to the above (1) or (2), including the titanium and the aromatic carboxylic acid ester so that a ratio represented by a content of the aromatic carboxylic acid ester / a content of the titanium is 1.5 or larger in terms of a mass ratio;
(4) the solid catalyst component for polymerization of an olefin according to any one of the above (1) to (3), including the titanium and the 1,3-diether compound so that a ratio represented by a content of the 1,3-diether compound / a content of the titanium is 1.5 or larger in terms of a mass ratio;
(5) a catalyst for polymerization of an olefin, including the solid catalyst component for polymerization of an olefin according to any one of above (1) to (4), and one or more organoaluminum compounds selected from the group consisting of compounds represented by the following general formula (I):

   R¹ₚAlQ₃₋ₚ (I)

   wherein R¹ represents an alkyl group having 1 to 6 carbon atoms, Q represents a hydrogen atom or a halogen atom, and p represents a real number of 0 < p ≤ 3;
(6) the catalyst for polymerization of an olefin according to the above (5), further including an organosilicon compound;
(7) a method for producing a polymer of an olefin, including polymerizing an olefin using the catalyst for polymerization of an olefin according to the above (5) or (6) ;
(8) the method for producing a polymer of an olefin according to the above (7), wherein the polymerization of the olefin is homopolymerization of propylene, or copolymerization of propylene and an α-olefin other than propylene;
(9) a polymer of an olefin, having:
   a melt flow rate (MFR) of 20 g/10 minutes or higher,
   a molecular weight distribution (Mw/Mn) that is a ratio of a weight average molecular weight (Mw) to a number average molecular weight (Mn) of 4.0 to 7.0, and a molecular weight distribution (Mz/Mw) that is a ratio of a Z-average molecular weight (Mz) to the weight average molecular weight (Mw) of 2.0 to 7.0, and
   a flexural modulus (FM) of 1800 MPa or higher;
(10) a method for producing a propylene-based block copolymer, including:
   polymerizing an olefin containing 95 to 100% by mass of propylene using the catalyst for polymerization of an olefin according to the above (5) or (6) to obtain a propylene-based polymer having a melt flow rate (MFR) of 20 g/10 minutes or higher, a molecular weight distribution (Mw/Mn) that is a ratio of a weight average molecular weight (Mw) to a number average molecular weight (Mn) of 4.0 to 7.0, a molecular weight distribution (Mz/Mw) that is a ratio of a Z-average molecular weight (Mz) to the weight average molecular weight (Mw) of 2.0 to 7.0, and a flexural modulus (FM) of 1800 MPa or higher; and
   then polymerizing propylene and an α-olefin other than propylene, in the presence of the obtained propylene-based polymer; and
(11) a propylene-based block copolymer obtained by
   polymerizing an olefin containing 95 to 100% by mass of propylene using the catalyst for polymerization of an olefin according to the above (5) or (6) to obtain a propylene-based polymer having a melt flow rate (MFR) of 20 g/10 minutes or higher, a molecular weight distribution (Mw/Mn) that is a ratio of a weight average molecular weight (Mw) to a number average molecular weight (Mn) of 4.0 to 7.0, a molecular weight distribution (Mz/Mw) that is a ratio of a Z-average molecular weight (Mz) to the weight average molecular weight (Mw) of 2.0 to 7.0, and a flexural modulus (FM) of 1800 MPa or higher, and
   then polymerizing propylene and an α-olefin other than propylene, in the presence of the obtained propylene-based polymer.

### [Advantageous Effects of Invention]

The present invention can provide a solid catalyst component for polymerization of an olefin, which can easily produce a polymer of an olefin, which is excellent in fluidity and also is high in rigidity even though the molecular weight distribution is narrow, without performing complicated polymerization treatment, because of containing magnesium and halogen, and also titanium, an aromatic carboxylic acid ester and a 1,3-diether compound in predetermined amounts, respectively; and can also provide a catalyst for polymerization of an olefin, a method for producing a polymer of an olefin, a polymer of an olefin, a method for producing a propylene-based block copolymer, and a propylene-based block copolymer.

### [Description of Embodiments]

### <Solid catalyst component for polymerization of olefin>

Firstly, a solid catalyst component for polymerization of an olefin according to the present invention will be described below.

A solid catalyst component for polymerization of an olefin according to the present invention is a solid catalyst component for polymerization of an olefin, including magnesium, titanium and halogen, and also including an aromatic carboxylic acid ester and a 1,3-diether compound as internal electron-donating compounds, wherein
a content ratio of the titanium is 0.5 to 2.0% by mass,
a content ratio of the aromatic carboxylic acid ester in a total content of the internal electron-donating compounds is 40 to 60 mol%, and
a content ratio of the 1,3-diether compound in the total content of the internal electron-donating compounds is 40 to 60 mol%.

A solid catalyst component for polymerization of an olefin according to the present invention includes magnesium, titanium and halogen, and also includes an aromatic carboxylic acid ester and a 1,3-diether compound as internal electron-donating compounds.

A solid catalyst component for polymerization of an olefin according to the present invention includes a contact reaction product obtained by contacting and reacting raw material components serving as supply sources of magnesium, titanium and halogen, and an aromatic carboxylic acid ester and a 1,3-diether compound serving as internal electron-donating compounds with each other in an organic solvent; and specifically include the contact reaction product that is formed by using a magnesium compound and a tetravalent titanium halogen compound as raw material components being sources of supplying magnesium, titanium and halogen, and contacting the raw materials and internal electron-donating compounds containing the aromatic carboxylic acid ester and the 1,3-diether compound with each other.

Examples of the magnesium compound can include one or more compounds selected from dialkoxy magnesium, magnesium dihalide and alkoxy magnesium halide.

Among the above magnesium compounds, dialkoxy magnesium or magnesium dihalide is preferred. Specific examples thereof include dimethoxy magnesium, diethoxy magnesium, dipropoxy magnesium, dibutoxy magnesium, ethoxymethoxy magnesium, ethoxypropoxy magnesium, butoxyethoxy magnesium, magnesium dichloride, magnesium dibromide, and magnesium diiodide. Diethoxy magnesium or magnesium dichloride is particularly preferred.

Among the above magnesium compounds, dialkoxy magnesium may be obtained by reacting metal magnesium with an alcohol in the presence of halogen, a halogen-containing metal compound or the like.

The above dialkoxy magnesium is preferably in a granule form or a powder form, and the dialkoxy magnesium having an indefinite shape or a spherical shape may be used.

In the case of using spherical dialkoxy magnesium, a polymer powder having a more favorable particle shape and having a (more spherical) narrow particle size distribution is obtained. The handleability of the polymer powder is improved which has been formed at the time of polymerization operation, and the occlusion and the like can be prevented which originate in a fine powder contained in the formed polymer powder.

The spherical dialkoxy magnesium is not necessarily required to be truly spherical in shape, and dialkoxy magnesium having an oval shape or a potato shape may be used.

In addition, an average particle size (average particle size D50) of the dialkoxy magnesium is preferably 1.0 to 200.0 µm, and is more preferably 5.0 to 150.0 µm. Here, the average particle size D50 means a particle size of 50% at a cumulative particle size in a volume-cumulative particle size distribution at the time when measured with the use of a laser light scattering/diffraction particle size analyzer.

When the dialkoxy magnesium is spherical, the average particle size D50 is preferably 1.0 to 100.0 µm, more preferably 5.0 to 80.0 µm, and further preferably 10.0 to 70.0 µm.

In addition, for the particle size distribution of the dialkoxy magnesium, it is preferred that the dialkoxy magnesium should have a narrow particle size distribution with fewer numbers of a fine powder and a coarse powder.

Specifically, the dialkoxy magnesium preferably contains 20% or less, and more preferably 10% or less, of particles having a particle size of 5.0 µm or smaller, when measured with the use of a laser light scattering/diffraction particle size analyzer. On the other hand, the dialkoxy magnesium preferably contains 20% or less, more preferably 10% or less, of particles having a particle size of 100.0 µm or larger, when measured with the use of a laser light scattering/diffraction particle size analyzer.

Furthermore, when the particle size distribution thereof is represented by ln (D90/D10), the ln (D90/D10) is preferably 3 or smaller, and more preferably 2 or smaller. Here, D90 means a particle size of 90% at a cumulative particle size in a volume-cumulative particle size distribution, at the time when measured with the use of a laser light scattering/diffraction particle size analyzer. In addition, D10 means a particle size of 10% at a cumulative particle size in a volume-cumulative particle size distribution at the time when measured with the use of a laser light scattering/diffraction particle size analyzer.

A method for producing the spherical dialkoxy magnesium is illustrated in, for example, Japanese Patent Laid-Open No. 58-41832, Japanese Patent Laid-Open No. 62-51633, Japanese Patent Laid-Open No. 3-74341, Japanese Patent Laid-Open No. 4-368391, Japanese Patent Laid-Open No. 8-73388 and the like.

In the solid catalyst component for polymerization of an olefin according to the present invention, the magnesium compound which is a raw material component being a source of supplying magnesium has a specific surface area of preferably 5 m²/g or larger, more preferably 5 to 50 m²/g, and further preferably 10 to 40 m²/g.

A solid catalyst component for polymerization of an olefin having a desired specific surface area can be easily prepared, by use of a magnesium compound having a specific surface area within the above range.

Note that the specific surface area of the magnesium compound means a value measured by the BET method, in the present application document. Specifically, the specific surface area of the magnesium compound means a value measured by the BET method (automatic measurement) in the presence of a mixed gas of nitrogen and helium, with the use of Automatic Surface Area Analyzer HM model-1230 manufactured by Mountech Co., Ltd., after a measurement sample has been vacuum dried at 50°C for 2 hours in advance.

The magnesium compound is preferably in a solution state or a suspension state during reaction. Such a solution state or a suspension state can allow the reaction to proceed preferably.

The magnesium compound, when being solid, can be prepared into a magnesium compound solution by dissolving the magnesium compound in a solvent having the capability of solubilizing the magnesium compound, or can be prepared into a magnesium compound suspension by suspending the magnesium compound in a solvent having no capability of solubilizing the magnesium compound.

The magnesium compound, when being liquid, may be used directly as a magnesium compound solution, or may be used as a magnesium compound solution by further dissolving the liquid magnesium compound in a solvent having the capability of solubilizing the magnesium compound.

Examples of the compound which can solubilize the solid magnesium compound include at least one compound selected from the group consisting of an alcohol, an ether and an ester. An alcohol such as ethanol, propanol, butanol, or 2-ethylhexanol is preferred, and 2-ethylhexanol is particularly preferred.

On the other hand, examples of a medium having no capability of solubilizing the solid magnesium compound include one or more solvents selected from saturated hydrocarbon solvents and unsaturated hydrocarbon solvents which do not dissolve the magnesium compound.

The tetravalent titanium halogen compound that is a raw material component being a source of supplying titanium and halogen in the solid catalyst component for polymerization of an olefin according to the present invention is not particularly limited, and is preferably one or more compounds selected from the titanium halide and alkoxy titanium halide groups represented by the following general formula (II):

Ti(OR²)ᵣX₄₋ᵣ (II)

wherein R² represents an alkyl group having 1 to 4 carbon atoms; X represents a halogen atom such as a chlorine atom, a bromine atom, or an iodine atom; and r is an integer of 0 ≤ r ≤ 3.

Examples of the titanium halide represented by the general formula (II) include one or more titanium tetrahalides selected from titanium tetrachloride, titanium tetrabromide, titanium tetraiodide, and the like.

Examples of the alkoxy titanium halide represented by the general formula (II) include one or more compounds selected from methoxy titanium trichloride, ethoxy titanium trichloride, propoxy titanium trichloride, n-butoxy titanium trichloride, dimethoxy titanium dichloride, diethoxy titanium dichloride, dipropoxy titanium dichloride, di-n-butoxy titanium dichloride, trimethoxy titanium chloride, and triethoxy titanium chloride, tripropoxy titanium chloride, tri-n-butoxy titanium chloride, and the like.

The tetravalent titanium halogen compound is preferably a titanium tetrahalide, and is more preferably titanium tetrachloride.

These titanium compounds may be used singly or in combination of two or more types thereof.

The solid catalyst component for polymerization of an olefin according to the present invention includes an aromatic carboxylic acid ester as an internal electron-donating compound.

The aromatic carboxylic acid ester is preferably an aromatic polycarboxylic acid ester.

Examples of the aromatic polycarboxylic acid esters include aromatic dicarboxylic acid diesters.

Specific examples of the aromatic dicarboxylic diester include: phthalic diesters such as dimethyl phthalate, diethyl phthalate, di-n-propyl phthalate, diisopropyl phthalate, di-n-butyl phthalate, diisobutyl phthalate, di-n-pentyl phthalate, diisopentyl phthalate, dineopentyl phthalate, di-n-hexyl phthalate, dihexyl phthalate, methyl ethyl phthalate, n-propyl (ethyl) phthalate, ethyl isopropyl phthalate, n-butyl (ethyl) phthalate, ethyl isobutyl phthalate, n-pentyl (ethyl) phthalate, ethyl isopentyl phthalate, ethyl neopentyl phthalate, and n-hexyl (ethyl) phthalate; halogen-substituted phthalic acid diesters such as diethyl 4-chlorophthalate, di-n-propyl 4-chlorophthalate, diisopropyl 4-chlorophthalate, di-n-butyl 4-chlorophthalate, diisobutyl 4-chlorophthalate, diethyl 4-bromophthalate, di-n-propyl 4-bromophthalate, diisopropyl 4-bromophthalate, di-n-butyl 4-bromophthalate, and diisobutyl 4-bromophthalate; and alkyl-substituted phthalic acid diesters such as diethyl 4-methylphthalate, di-n-propyl 4-methylphthalate, diisopropyl 4-methylphthalate, di-n-butyl 4-methylphthalate, and diisobutyl 4-methylphthalate.

Among the above aromatic dicarboxylic acid diesters, preferable phthalates are diethyl phthalate, di-n-propyl phthalate, di-n-butyl phthalate, diisobutyl phthalate, di-n-pentyl phthalate, diisopentyl phthalate, dineopentyl phthalate, di-n-hexyl phthalate, n-propyl (ethyl) phthalate, isopropyl ethyl phthalate, n-butyl (ethyl) phthalate, isobutyl ethyl phthalate, diethyl 4-methylphthalate, di-n-propyl 4-methylphthalate, diisobutyl 4-methylphthalate, diisobutyl 4-bromophthalate, diisopentyl 4-bromophthalate, dineopentyl 4-bromophthalate and the like; and more preferable phthalates are diethyl phthalate, di-n-propyl phthalate, di-n-butyl phthalate, diisobutyl phthalate, n-propyl (ethyl) phthalate, ethyl isopropyl phthalate, n-butyl (ethyl) phthalate, ethyl isobutyl phthalate, diethyl 4-methylphthalate, di-n-propyl 4-methylphthalate, diisobutyl 4-methylphthalate, diisobutyl 4-bromophthalate, diisopentyl 4-bromophthalate and dineopentyl 4-bromophthalate.

These aromatic dicarboxylic acid diesters may be used singly, or in combination of two or more types thereof.

The solid catalyst component for polymerization of an olefin according to the present invention includes a 1,3-diether compound as an internal electron-donating compound.

In the present application document, the 1,3-diether compound means a group of compounds that have a structure (1,3-dialkoxypropane structure) in which propane is used as a basic skeleton and an ether group is bonded to the 1,3-position thereof, and may further contain a desired substituent.

Examples of the 1,3-diether compound include one or more compounds selected from compounds represented by the following general formula (III);

R³OCH₂CR⁴R⁵CH₂OR⁶ (III)

wherein R⁴ and R⁵ each represent a hydrogen atom, a halogen atom, an alkyl group having 1 to 12 carbon atoms, a vinyl group, an alkenyl group having 3 to 12 carbon atoms, a cycloalkyl group or cycloalkenyl group having 3 to 12 carbon atoms, an aromatic hydrocarbon group or halogen-substituted aromatic hydrocarbon group having 6 to 12 carbon atoms, an aromatic hydrocarbon group having 7 to 12 carbon atoms having a substituent, an alkylamino group having 1 to 12 carbon atoms, or a dialkylamino group having 2 to 12 carbon atoms; R⁴ and R⁵ are optionally the same as or different from each other; R⁴ and R⁵ are optionally linked to each other to form a ring; R³ and R⁶ each represent an alkyl group having 1 to 12 carbon atoms, a vinyl group, an alkenyl group having 3 to 12 carbon atoms, a cycloalkyl group having 3 to 6 carbon atoms, an aromatic hydrocarbon group or halogen-substituted aromatic hydrocarbon group having 6 to 12 carbon atoms, or an aromatic hydrocarbon group having 7 to 12 carbon atoms having a substituent; and R³ and R⁶ are optionally the same as or different from each other.

Specific examples thereof include one or more compounds selected from 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, 2,2-bis(cyclohexylmethyl)1,3-dimethoxypropane, and 9,9-bis(methoxymethyl) fluorene. Among them, one or more compounds selected from 2-isopropyl-2-isobutyl-1,3-dimethoxypropane, 2-isopropyl-2-isopentyl-1,3-dimethoxypropane and 9,9-bis(methoxymethyl) fluorene are preferred.

The solid catalyst component for polymerization of an olefin according to the present invention may include, as an internal electron-donating compound, an aromatic carboxylic acid ester and a 1,3-diether compound, and also another internal electron-donating compound, as long as the effect of the present invention can be achieved (hereinafter referred to as "other internal electron-donating compound").

The other internal electron-donating compound is not particularly limited, and is preferably an organic compound other than the aromatic carboxylic acid esters and the 1,3-diether compound, and an organic compound containing an oxygen atom or a nitrogen atom. Examples thereof can include one or more compounds selected from alcohols, phenols, ethers, esters, ketones, acid halides, aldehydes, amines, amides, nitriles, isocyanates, and organosilicon compounds containing an Si-O-C bond or an Si-N-C bond.

The other internal electron-donating compounds are more preferably one or more compounds selected from ether compounds such as monoethers, diethers and ether carbonates, and esters such as monocarboxylic acid esters and polycarboxylic acid esters; and are further preferably one or more compounds selected from aliphatic polycarboxylic acid esters, and alicyclic polycarboxylic acid esters, and diethers, and ether carbonates.

Other internal electron-donating compounds are particularly preferably one or more compounds selected from aliphatic polycarboxylic acid esters such as diethyl maleate, dibutyl maleate, dibutyl dimethylmaleate, dibutyl diethylmaleate, diethyl diisobutylmaleate, diethyl succinate, diethyl methylsuccinate, diethyl 2,3-diisopropylsuccinate, di-n-butyl malonate, diethyl malonate, dimethyl diisobutylmalonate, diethyl diisobutylmalonate, dimethyl benzylidenemalonate, diethyl benzylidenemalonate and dibutyl benzylidenemalonate; alicyclic polycarboxylic acid esters such as diethyl cyclohexanedicarboxylic acid, di-n-propyl cyclohexanedicarboxylic acid, dibutyl cyclohexanedicarboxylic acid, diisobutyl cyclohexanedicarboxylic acid, diethyl 1-cyclohexene-1,2-dicarboxylic acid, di-n-propyl 1-cyclohexene-1,2-dicarboxylic acid, dibutyl 1-cyclohexene-1,2-dicarboxylic acid, diisobutyl 1-cyclohexene-1,2-dicarboxylic acid, diethyl 4-cyclohexene-1,2-dicarboxylic acid, di-n-propyl 4-cyclohexene-1,2-dicarboxylic acid, dibutyl 4-cyclohexene-1,2-dicarboxylic acid and diisobutyl 4-cyclohexene-1,2-dicarboxylic acid; and ether carbonates such as (2-ethoxyethyl)ethyl carbonate and (2-ethoxyethyl)phenyl carbonate.

In the solid catalyst component for polymerization of an olefin according to the present invention, a content ratio of magnesium (magnesium atom) is preferably 10 to 30% by mass, is more preferably 15 to 25% by mass, and is further preferably 16 to 22% by mass.

In the solid catalyst component for polymerization of an olefin according to the present invention, a content ratio of titanium (titanium atom) is 0.5 to 2.0% by mass, is preferably 0.7 to 1.8% by mass, and is further preferably 0.9 to 1.8% by mass.

In the solid catalyst component for polymerization of an olefin according to the present invention, the content ratio of titanium is within the above range, and also a content ratio of the aromatic carboxylic acid ester and a content ratio of the 1,3-diether compound in the total content of the internal electron-donating compounds are each within a predetermined range, which will be described below; and thereby, when the solid catalyst component is used for the polymerization of an olefin, a polymer of an olefin, which is excellent in fluidity and also is high in rigidity even though the molecular weight distribution is narrow, can be easily produced without performing complicated polymerization treatment.

In the solid catalyst component for polymerization of an olefin according to the present invention, a content ratio of halogen (halogen atom) is preferably 50 to 75% by mass, is more preferably 55 to 70% by mass, and is further preferably 58 to 65% by mass.

In the present application document, the content ratio of magnesium in the solid catalyst component for polymerization of an olefin means a value measured by an EDTA titration method which involves dissolving the solid catalyst component in a hydrochloric acid solution and titrating the magnesium atom with an EDTA solution.

In the present application document, the content ratio of titanium in the solid catalyst component for polymerization of an olefin means a value measured in accordance with a method (redox titration) described in JIS 8311-1997 "Method for determination of titanium in titanium ores".

In the present application document, a content of halogen in the solid catalyst component for polymerization of an olefin means a value measured by a silver nitrate titration method which involves treating the solid catalyst component with a mixed solution of sulfuric acid and pure water to prepare an aqueous solution, then sampling a predetermined amount, and titrating the halogen atom with a silver nitrate standard solution.

In the solid catalyst component for polymerization of an olefin according to the present invention, a content ratio of the aromatic carboxylic acid ester is preferably 3 to 25% by mass, is more preferably 5 to 23% by mass, and is further preferably 7 to 20% by mass.

In the solid catalyst component for polymerization of the olefin according to the present invention, a content ratio of the 1,3-diether compound is preferably 1 to 25% by mass, is more preferably 3 to 20% by mass, and is further preferably 5 to 18% by mass.

When the solid catalyst component for polymerization of an olefin according to the present invention contains the other internal electron-donating compound, a content ratio of the other internal electron-donating compound in the solid catalyst component for polymerization of an olefin according to the present invention may be 0.0 to 10.0% by mass.

In the solid catalyst component for polymerization of an olefin according to the present invention, the content ratio of aromatic carboxylic acid ester in the total content of the internal electron-donating compounds is 40 to 60 mol%, is preferably 42 to 58 mol%, and is more preferably 44 to 56 mol%.

In the solid catalyst component for polymerization of an olefin according to the present invention, a content ratio of the 1,3-diether compound in the total content of the internal electron-donating compounds is 40 to 60 mol%, is preferably 42 to 58 mol%, and is more preferably 44 to 56 mol%.

In the solid catalyst component for polymerization of an olefin according to the present invention, the content ratios of the aromatic carboxylic acid ester and the 1,3-diether compound in the total content of the internal electron-donating compounds are each within the above range, and also the aforementioned content ratio of titanium is within the above range; and thereby, when the solid catalyst component is used for the polymerization of an olefin, a polymer of an olefin, which is excellent in fluidity and also is high in rigidity even though the molecular weight distribution is narrow, can be easily produced without performing complicated polymerization treatment.

The solid catalyst component for polymerization of an olefin according to the present invention preferably contains titanium, the aromatic carboxylic acid ester and the 1,3-diether compound so that a ratio represented by a total content of the aromatic carboxylic acid ester and the 1,3-diether compound / a content of titanium is 2.0 or larger in terms of a mass ratio, more preferably contains so that the ratio is 3.0 to 20.0 in terms of the mass ratio, and further preferably contains so that the ratio is 4.0 to 15.0 in terms of the mass ratio.

In the solid catalyst component for polymerization of an olefin according to the present invention, a mass ratio represented by the total content of the aromatic carboxylic acid ester and the 1,3-diether compound / the content of titanium is 2.0 or larger; and thereby, when the solid catalyst component is used for the polymerization of an olefin, a polymer of an olefin, which is excellent in fluidity and also is high in rigidity even though the molecular weight distribution is narrow, can be further easily produced without performing complicated polymerization treatment.

The solid catalyst component for polymerization of an olefin according to the present invention preferably contains titanium and the aromatic carboxylic acid ester so that a ratio represented by a content of the aromatic carboxylic acid ester / a content of titanium is 1.5 or larger in terms of a mass ratio, more preferably contains so that the ratio is 3.0 to 20.0 in terms of the mass ratio, and further preferably contains so that the ratio is 4.0 to 15.0 in terms of the mass ratio.

The solid catalyst component for polymerization of an olefin according to the present invention preferably contains titanium and the 1,3-diether compound so that a ratio represented by a content of the 1,3-diether compound / a content of titanium is 1.5 or larger in terms of a mass ratio, more preferably contains so that the ratio is 3.0 to 20.0 in terms of the mass ratio, and further preferably contains so that the ratio is 4.0 to 15.0 in terms of the mass ratio.

In the solid catalyst component for polymerization of an olefin according to the present invention, a mass ratio represented by the content of the aromatic carboxylic acid ester / the content of titanium is 1.5 or larger, and a ratio represented by the content of the 1,3-diether compound / the content of titanium is 1.5 or larger; and thereby, when the solid catalyst component is used for the polymerization of an olefin, a polymer of an olefin, which is excellent in fluidity and also is high in rigidity even though the molecular weight distribution is narrow, can be still more easily produced without performing complicated polymerization treatment.

In the present application document, each content of the aromatic carboxylic acid ester, the 1,3-diether compound and the other internal electron-donating compound in the solid catalyst component for polymerization of an olefin means a value measured by a calibration curve prepared in advance by gas chromatography with the use of a standard solution.

Specifically, each content of the aromatic carboxylic acid ester, the 1,3-diether compound and the other internal electron-donating compound means a value determined by use of a calibration curve which has been measured on the basis of a standard solution of a compound to be measured, when measured under the following conditions with the use of gas chromatography (GC-14B, manufactured by Shimadzu Corporation).

### <Measurement conditions>

Column: packed column (φ2.6×2.1 m, Silicone SE-30 10%, Chromosorb WAWDMCS 80/100, manufactured by GL Sciences Inc.)
Detector: FID (Flame Ionization Detector, hydrogen flame ionization detector)
Carrier gas: helium, flow rate of 40 ml/min
Measurement temperature: vaporizing chamber: 280°C, column: 225°C, and detector: 280°C; or vaporizing chamber: 265°C, column: 180°C, and detector: 265°C

An average particle size (average particle size D50) of the solid catalyst component for polymerization of an olefin according to the present invention is not particularly limited, but is preferably 5.0 to 100.0 µm, is more preferably 10.0 to 80.0 µm, and is further preferably 15.0 to 70.0 µm.

Here, the average particle size D50 means a particle size of 50% at a cumulative particle size in a volume-cumulative particle size distribution, at the time when measured with the use of a laser light scattering/diffraction particle size analyzer.

Next, a method for producing the solid catalyst component for polymerization of an olefin according to the present invention will be described.

The solid catalyst component for polymerization of an olefin according to the present invention can be produced by contacting, for example, a magnesium compound, a tetravalent titanium halogen compound, and an aromatic carboxylic acid ester and a 1,3-diether compound as internal electron-donating compounds with each other so that a content ratio of the above titanium is 0.5 to 2.0% by mass, a content ratio of the aromatic carboxylic acid ester in a total content of the above internal electron-donating compounds is 40 to 60 mol%, and a content ratio of the 1,3-diether compound in the total content of the above internal electron-donating compounds is 40 to 60 mol%, and by reacting the compounds.

Details of the above magnesium compound, tetravalent titanium halogen compound, aromatic carboxylic acid ester and 1,3-diether compound are as mentioned above.

In the method for producing the solid catalyst component for polymerization of an olefin according to the present invention, the aforementioned other internal electron-donating compound may be used as the internal electron-donating compound, together with the aromatic carboxylic acid ester and the 1,3-diether compound, as needed.

Details of other internal electron-donating compounds are as mentioned above. In addition, the amount of the other internal electron-donating compound to be used is also preferably appropriately blended so as to satisfy the content of the other internal electron-donating compound described above.

Contacting of the above magnesium compound, the tetravalent titanium halogen compound, the aromatic carboxylic acid ester, the 1,3-diether compound and other internal electron-donating compound as needed with each other may be performed in the presence of a polysiloxane which is a third component.

The polysiloxane is a polymer having a siloxane bond (-Si-O- bond) in the backbone. The polysiloxane is also generally called silicone oil, and means chain, partially hydrogenated, cyclic or modified polysiloxane that is liquid or viscous at ordinary temperature, and has a viscosity of 0.02 to 100.00 cm²/s (2 to 10000 cSt), and is more preferably 0.03 to 5.00 cm²/s (3 to 500 cSt), at 25°C.

Examples of the chain polysiloxane include hexamethyldisiloxane, hexaethyldisiloxane, hexapropyldisiloxane, hexaphenyldisiloxane 1,3-divinyltetramethyldisiloxane, 1,3-dichlorotetramethyldisiloxane, 1,3-dibromotetramethyldisiloxane, chloromethylpentamethyldisiloxane, and 1,3-bis(chloromethyl)tetramethyldisiloxane, as disiloxane; and dimethylpolysiloxane and methylphenylpolysiloxane, as polysiloxane other than disiloxane. Examples of the partially hydrogenated polysiloxane include methyl hydrogen polysiloxane having a hydrogenation rate of 10 to 80%. Examples of the cyclic polysiloxane include hexamethylcyclotrisiloxane, octamethylcyclotetrasiloxane, decamethylcyclopentasiloxane, 2,4,6-trimethylcyclotrisiloxane, and 2,4,6,8-tetramethylcyclotetrasiloxane. Examples of the modified polysiloxane include higher fatty acid group-substituted dimethylsiloxane, epoxy group-substituted dimethylsiloxane, and polyoxyalkylene group-substituted dimethylsiloxane. Among them, decamethylcyclopentasiloxane and dimethylpolysiloxane are preferred, and decamethylcyclopentasiloxane is particularly preferred.

It is preferred that the treatment (contact treatment) of contacting a magnesium compound, a tetravalent titanium halogen compound, an aromatic carboxylic acid ester and a 1,3-diether compound with each other is performed in an organic solvent. In addition, the organic solvent is preferably an inert organic solvent.

The inert organic solvent is preferably liquid at ordinary temperature (20°C) with a boiling point of 50 to 150°C, and is more preferably an aromatic hydrocarbon compound or a saturated hydrocarbon compound which is liquid at ordinary temperature and has a boiling point of 50 to 150°C.

Specific examples of the inert organic solvent include one or more compounds selected from: linear aliphatic hydrocarbon compounds such as hexane, heptane, and decane; branched aliphatic hydrocarbon compounds such as methylheptane; alicyclic hydrocarbon compounds such as cyclohexane, methylcyclohexane, and ethylcyclohexane; and aromatic hydrocarbon compounds such as toluene, xylene, and ethylbenzene.

Among the above inert organic solvents, an aromatic hydrocarbon compound that is liquid at ordinary temperature and has a boiling point of 50 to 150°C is preferred, because the aromatic hydrocarbon compound can improve the activity of the resulting solid catalyst component and improve the stereoregularity of the resulting polymer.

The temperature at the time when the above components are contacted and reacted with each other is preferably 0 to 130°C, is more preferably 40 to 130°C, is further preferably 30 to 120°C, and is still further preferably 80 to 120°C. In addition, the reaction time is preferably 1 minute or longer, is more preferably 10 minutes or longer, is further preferably 30 minutes to 6 hours, is still further preferably 30 minutes to 5 hours, and is even further preferably 1 to 4 hours.

Prior to the reaction, low-temperature aging may be carried out. Here, the low-temperature aging means a preliminary reaction of contacting the respective components with each other at a temperature lower than the temperature at the time of the above reaction.

The temperature at the time of the low-temperature aging is preferably -20 to 70°C, is more preferably -10 to 60°C, and is further preferably -10 to 30°C. The low-temperature aging time is preferably 1 minute to 6 hours, is more preferably 5 minutes to 4 hours, and is further preferably 30 minutes to 3 hours.

When the magnesium compound and the tetravalent titanium halogen compound are used as the raw material components being the source of supplying magnesium, titanium and halogen, and the compounds are mutually contacted with internal electron-donating compounds containing the 1,3-diether compound with the use of an inert organic solvent, the amount of each component to be used may be appropriately determined depending on the content ratio of each component constituting the solid catalyst component for polymerization of an olefin to be obtained.

In the contact treatment among the above components, the reaction is preferably performed with stirring in a container equipped with a stirrer, under conditions free of moisture and the like, in an inert gas atmosphere.

After the completion of the reaction in the contact treatment, the obtained reaction solution is left to stand, and the supernatant liquid is appropriately removed into a wet form (slurry form), and thereby a solid catalyst component can be obtained. Furthermore, the solid catalyst component can also be obtained by drying the wet reaction solution by hot air drying or the like.

The above reaction solution may be subjected to washing treatment, and the washing treatment is usually performed with the use of a washing liquid.

Examples of the washing liquid can include the same as the inert organic solvent described above, and one or more compounds are preferred which are selected from: linear aliphatic hydrocarbon compounds that are liquid at ordinary temperature and have a boiling point of 50 to 150°C, such as hexane, heptane, and decane; cyclic aliphatic hydrocarbon compounds that are liquid at ordinary temperature and have a boiling point of 50 to 150°C, such as methylcyclohexane and ethylcyclohexane; aromatic hydrocarbon compounds that are liquid at ordinary temperature and have a boiling point of 50 to 150°C, such as toluene, xylene, ethylbenzene, and o-dichlorobenzene; and the like.

The above washing liquid used easily dissolves and removes by-products and impurities from the reaction solution, and a reaction solution after washing can be obtained. Furthermore, when the reaction solution after washing is dried by hot air drying or the like, a solid catalyst component can also be obtained.

The washing treatment is preferably performed at a temperature of 0 to 120°C, is more preferably at a temperature of 0 to 110°C, is further preferably at a temperature of 30 to 110°C, is still further preferably at a temperature of 50 to 110°C, and is even further preferably at a temperature of 50 to 100°C.

The washing treatment is preferably performed by adding a desired amount of washing liquid to the reaction solution, stirring the mixture, and then removing the liquid phase by a filtration method or a decantation method.

In addition, the number of washing times may be a plurality of times (two or more times).

After the components have been contacted with each other, impurities of unreacted raw material components or reaction by-products (alkoxy titanium halide, titanium tetrachloride-carboxylic acid complex, and the like) remaining in the reaction solution after washing can be removed by the washing treatment.

After the contact treatment or the washing treatment, aftertreatment may be appropriately carried out.

In the case of carrying out the above aftertreatment, examples thereof can include: a mode of further contacting a tetravalent titanium halogen compound with the reaction solution which has been obtained after the completion of the reaction, or the reaction solution after washing, which has been obtained after the above washing treatment; and a mode of further contacting the tetravalent titanium halogen compound with any one of the above reaction solutions, and then washing the resultant reaction solution. The washing after the above aftertreatment can be performed in the same way as in the aforementioned washing of the reaction solution.

The reaction product obtained after the above aftertreatment and the reaction product obtained by the washing after the aftertreatment are usually in a suspension state. Each reaction product in the suspension state is prepared into a wet state (slurry state) by leaving the suspension standing and removing a supernatant, and the solid catalyst component can be obtained. Furthermore, the solid catalyst component can be obtained by drying the solid catalyst component in the wet state by hot air drying or the like.

The present invention can provide a solid catalyst component for polymerization of an olefin, which can easily produce a polymer of an olefin, which is excellent in fluidity and also is high in rigidity even though the molecular weight distribution is narrow, without performing complicated polymerization treatment, because of including magnesium and halogen, and also including titanium, an aromatic carboxylic acid ester and a 1,3-diether compound in predetermined amounts, respectively.

### <Catalyst for polymerization of olefin and method for producing the same>

Next, the catalyst for polymerization of an olefin according to the present invention will be described.

The catalyst for polymerization of an olefin according to the present invention comprises: a solid catalyst component for polymerization of an olefin according to the present invention; and one or more organoaluminum compounds selected from the compounds represented by the following general formula (I):

R¹ₚAlQ₃₋ₚ (I)

wherein R¹ represents an alkyl group having 1 to 6 carbon atoms, Q represents a hydrogen atom or a halogen atom, and p represents a real number of 0 < p ≤ 3.

The details of the solid catalyst component for polymerization of an olefin, which is contained in the catalyst for polymerization of an olefin according to the present invention, are as described in the description of the solid catalyst component for polymerization of an olefin according to the present invention.

The catalyst for polymerization of an olefin according to the present invention comprises: the above specific solid catalyst component for polymerization of an olefin; and one or more organoaluminum compounds selected from the compounds represented by the general formula (I).

In the organoaluminum compound represented by the general formula (I), R¹ is an alkyl group having 1 to 6 carbon atoms. Specific examples thereof can include a methyl group, an ethyl group, an n-propyl group, an isopropyl group, an n-butyl group, and an isobutyl group.

In the above organoaluminum compound represented by the general formula (I), Q represents a hydrogen atom or a halogen atom. When Q is the halogen atom, examples thereof can include a fluorine atom, a chlorine atom, a bromine atom, and an iodine atom.

Specific examples of the above organoaluminum compounds represented by the general formula (I) can include one or more compounds selected from triethylaluminum, diethylaluminum chloride, triisobutylaluminum, diethylaluminum bromide, and diethylaluminum hydride. Triethylaluminum or triisobutylaluminum is preferred.

The catalyst for polymerization of an olefin according to the present invention includes preferably 1 to 2000 mol, more preferably 50 to 1000 mol, of the organoaluminum compound represented by the general formula (I), per mol of a titanium atom which constitutes the solid catalyst component for polymerization of an olefin.

The catalyst for polymerization of the olefin according to the present invention may further include an organosilicon compound.

The organosilicon compound constituting the catalyst for polymerization of an olefin according to the present invention functions as the external electron-donating compound; and includes one or more compounds selected from the group consisting of compounds represented by the following general formula (IV):

R⁷ᵣSi(NR⁸R⁹)ₛ(OR¹⁰)₄₋₍ₜ₊ₛ₎ (IV)

wherein t is an integer of 0 or 1 to 2, s is an integer of 0 or 1 to 2, t+s is an integer of 0 or 1 to 4; R⁷, R⁸ and R⁹ are each any group selected from the group consisting of a hydrogen atom, linear or branched alkyl groups having 1 to 12 carbon atoms, substituted or unsubstituted cycloalkyl groups, a phenyl group, allyl groups and aralkyl groups, each may contain a hetero atom, and are optionally the same as or different from each other; R⁸ and R⁹ are optionally linked to each other to form a ring shape, and R⁷, R⁸ and R⁹ are optionally the same as or different from each other; and R¹⁰ is any group selected from the group consisting of alkyl groups having 1 to 4 carbon atoms, cycloalkyl groups, phenyl groups, vinyl groups, allyl groups and aralkyl groups, and may contain a hetero atom.

In the compound represented by the general formula (IV), R⁷ is any group selected from the group consisting of a hydrogen atom, linear or branched alkyl groups having 1 to 12 carbon atoms, substituted or unsubstituted cycloalkyl groups, a phenyl group, allyl groups and aralkyl groups, and may contain a hetero atom.

Preferable groups as R⁷ are linear or branched alkyl groups having 1 to 10 carbon atoms or cycloalkyl groups having 5 to 8 carbon atoms, and particularly preferable groups are linear or branched alkyl groups having 1 to 8 carbon atoms or cycloalkyl groups having 5 to 8 carbon atoms.

In the compound represented by the general formula (IV), R⁸ or R⁹ is any group selected from the group consisting of a hydrogen atom, linear or branched alkyl groups having 1 to 12 carbon atoms, substituted or unsubstituted cycloalkyl groups, a phenyl group, allyl groups and aralkyl groups, and may contain a hetero atom.

Preferable groups as R⁸ or R⁹ are linear or branched alkyl groups having 1 to 10 carbon atoms and cycloalkyl groups having 5 to 8 carbon atoms, and particularly preferable groups are linear or branched alkyl groups having 1 to 8 carbon atoms and cycloalkyl groups having 5 to 8 carbon atoms.

In addition, R⁸ and R⁹ are optionally linked to each other to form a ring shape, and in this case, (NR⁸R⁹) which forms the ring shape is preferably a perhydroquinolino group or a perhydroisoquinolino group.

In the compound represented by the general formula (IV), R⁷, R⁸ and R⁹ are optionally the same as or different from each other.

In the compound represented by the general formula (IV), R¹⁰ is any group selected from the group consisting of alkyl groups having 1 to 4 carbon atoms, cycloalkyl groups, a phenyl group, allyl groups and aralkyl groups, and may contain a hetero atom.

As R¹⁰, linear or branched alkyl groups having 1 to 4 carbon atoms are preferable.

Specific examples of the compound represented by such general formula (IV) include one or more organosilicon compounds selected from the group consisting of phenylalkoxysilane, alkylalkoxysilane, phenylalkylalkoxysilane, cycloalkylalkoxysilane, cycloalkylalkylalkoxysilane, (alkylamino)alkoxysilane, alkyl(alkylamino)alkoxysilane, alkyl(alkylamino)silane, and alkylaminosilane.

Examples of compounds of the general formula (IV) in which s is 0 include one or more organosilicon compounds which are particularly preferably selected from di-n-propyldimethoxysilane, diisopropyldimethoxysilane, di-n-butyldimethoxysilane, diisobutyldimethoxysilane, di-t-butyldimethoxysilane, t-butylmethyldimethoxysilane, t-butylethyldimethoxysilane, di-n-butyldiethoxysilane, t-butyltrimethoxysilane, t-butyltriethoxysilane, dicyclohexyldimethoxysilane, dicyclohexyl diethoxysilane, cyclohexyl methyldimethoxysilane, cyclohexyl methyldiethoxysilane, cyclohexyl ethyldimethoxysilane, cyclohexyl ethyldiethoxysilane, dicyclopentyl dimethoxysilane, dicyclopentyl diethoxysilane, cyclopentyl methyldimethoxysilane, cyclopentyl methyldiethoxysilane, cyclopentyl lethyldiethoxysilane, cyclohexyl cyclopentyl dimethoxysilane, cyclohexyl cyclopentyl diethoxysilane, 3-methylcyclohexylcyclopentyldimethoxysilane, 4-methylcyclohexylcyclopentyldimethoxysilane, and 3,5-dimethylcyclohexylcyclopentyldimethoxysilane.

Examples of the compounds of the general formula (IV) in which s is 1 or 2 include one or more organosilicon compounds selected from di(alkylamino) dialkoxysilanes, (alkylamino)(cycloalkylamino) dialkoxysilanes, (alkylamino)(alkyl) dialkoxysilanes, di(cycloalkylamino) dialkoxysilanes, vinyl(alkylamino)dialkoxysilanes, allyl(alkylamino) dialkoxysilanes, (alkoxyamino) trialkoxysilanes, (alkylamino) trialkoxysilanes, and(cycloalkylamino) trialkoxysilanes; and particularly preferred examples thereof include one or more organic silicon compounds which are selected from ethyl t-butylamino) dimethoxysilane, cyclohexyl (cyclohexylamino) dimethoxysilane, ethyl(t-butylamino) dimethoxysilane, bis(cyclohexylamino) dimethoxysilane, bis(perhydroisoquinolino)dimethoxysilane, bis(perhydroquinolino)dimethoxysilane, ethyl(isoquinolino) dimethoxysilane, diethylaminotrimethoxysilane and diethylaminotriethoxysilane, and among them, which are selected from bis(perhydroisoquinolino)dimethoxysilane, diethylaminotrimethoxysilane, and diethylaminotriethoxysilane.

Note that two or more types of compounds represented by the above general formula (IV) may be used in combination.

The catalyst for polymerization of an olefin according to the present invention preferably contains 0.002 to 10 mol, more preferably 0.01 to 2 mol, and further preferably 0.01 to 0.5 mol of an organosilicon compound, per mol of an organoaluminum compound represented by the above general formula (I).

In a case where the catalyst for polymerization of an olefin according to the present invention is contacted with a part of the olefin to be polymerized in advance, and is preliminarily polymerized as will be described below, it is suitable that the catalyst for polymerization of an olefin according to the present invention contains 0.1 to 1000 parts by mass of a polymer of an olefin with respect to 100 parts by mass of the solid catalyst component for polymerization of an olefin, which constitutes the catalyst for polymerization of an olefin.

The catalyst for polymerization of an olefin according to the present invention includes the solid catalyst component for polymerization of an olefin according to the present invention, an organoaluminum compound represented by the general formula (I) and further an organosilicon compound as needed; in other words, a contact product of these.

The catalyst for polymerization of an olefin according to the present invention may be prepared by contacting the solid catalyst component for polymerization of an olefin according to the present invention, an organoaluminum compound represented by the general formula (I) and further an organosilicon compound as needed, in the absence of an olefin; or may be prepared by contacting the component and the compounds in the presence of an olefin (in a polymerization system).

The contact between the above solid catalyst component for polymerization of an olefin and the organoaluminum compound represented by the general formula (I) is preferably performed in an inert gas (argon, nitrogen, or the like) atmosphere or a monomer (propylene, or the like) atmosphere, in order to prevent deterioration of the solid catalyst component for polymerization of an olefin, or the obtained catalyst for polymerization of an olefin.

In addition, the contact is also preferably performed in the presence of a dispersion medium such as an inert solvent in consideration of the easiness of operation. An aliphatic hydrocarbon compound such as hexane, heptane or cyclohexane, an aromatic hydrocarbon compound such as benzene, toluene, xylene or ethylbenzene, or the like is used as the inert solvent. Aliphatic hydrocarbon is more preferred. Among the inert solvents, hexane, heptane and cyclohexane are more preferred.

The temperature at which the above solid catalyst component for polymerization of an olefin, the organoaluminum compound represented by the general formula (I) and further the organosilicon compound as needed are contacted is preferably lower than 15°C, is more preferably -15°C to 10°C, and is further preferably 0°C to 10°C.

The contact time for which the above solid catalyst component for polymerization of an olefin, the organoaluminum compound represented by the general formula (I) and further the organosilicon compound as needed are contacted is preferably 30 minutes or shorter, is more preferably 5 seconds to 20 minutes, is further preferably 30 seconds to 15 minutes, and still further preferably 1 minute to 10 minutes.

Usually, when the organoaluminum compound which is a co-catalyst is contacted with the solid catalyst component for polymerization of an olefin, a reaction rapidly progresses, and the desorption of the aromatic carboxylic acid ester or the 1,3-diether compound, which constitutes the solid catalyst component, or the activation of the solid catalyst component by the organoaluminum compound which is the co-catalyst occurs, and particularly in an inert gas atmosphere, the deactivation of the catalytic active point (titanium active point) tends to occur due to an excessive reaction.

On the other hand, by performing the contact treatment at the above contact temperature for the above contact time, the excessive reaction of the organoaluminum compound to the titanium active point in the solid catalyst component can be suppressed, and the deactivation of the catalytic active point can be effectively suppressed.

In a method for producing the catalyst for polymerization of an olefin according to the present invention, a ratio of each component to be used may be appropriately determined depending on the content ratio of each component constituting the catalyst for polymerization of an olefin to be obtained.

The present invention can provide a catalyst for polymerization of an olefin, which can easily produce a polymer of an olefin, which is excellent in fluidity and also is high in rigidity even though the molecular weight distribution is narrow, without performing complicated polymerization treatment.

<Method for producing polymer of olefin>

Next, a method for producing a polymer of an olefin according to the present invention will be described.

The method for producing a polymer of an olefin according to the present invention includes polymerizing an olefin using the catalyst for polymerization of an olefin according to the present invention.

In the method for producing a polymer of an olefin according to the present invention, it is preferred that the polymerization of the olefin is propylene homopolymerization or copolymerization of propylene and an α-olefin other than propylene.

Examples of the α-olefin other than propylene include one or more compounds selected from ethylene, 1-butene, 1-pentene, 4-methyl-1-pentene, vinylcyclohexane and the like, and ethylene or 1-butene is preferred.

In the method for producing a polymer of an olefin according to the present invention, the homopolymerization of propylene may be performed, or the copolymerization of propylene and another α-olefin may be performed. In the case of copolymerizing propylene with another olefin, random copolymerization is typical which involves polymerizing propylene and a small amount of α-olefin monomer other than propylene (such as ethylene) serving as a comonomer by one stage, as well as block copolymerization which involves polymerizing a monomer exclusively containing propylene as an olefin in a first stage (first polymerization vessel), and copolymerizing propylene with another α-olefin such as ethylene in a second stage (second polymerization vessel) or more multiple stages (multistage polymerization vessels). The block copolymerization of propylene with another α-olefin is preferred.

In the method for producing a polymer of an olefin according to the present invention, the polymerization of the olefin may be performed in the presence of or also in the absence of an organic solvent.

In addition, the olefin to be polymerized can be used in any state of a gas and a liquid.

The polymerization of the olefin can be performed, for example, in a reactor such as an autoclave, by introducing the olefin in the presence of the catalyst for polymerization of an olefin according to the present invention, under a heated and pressurized state.

In the method for producing a polymer of an olefin according to the present invention, preliminary polymerization (hereinafter, appropriately referred to as pre-polymerization) may be performed prior to the polymerization of the olefin (hereinafter, appropriately referred to as main polymerization), by contacting a portion or the whole of the constituents of the catalyst for polymerization of an olefin obtained by the production method according to the present invention, with the olefin to be polymerized.

When the pre-polymerization is performed, the order of contact of the olefin and the constituents of the catalyst for polymerization of an olefin is arbitrary, which is obtained by the production method according to the present invention. Preferably, the organoaluminum compound is first charged into a pre-polymerization system which is set to an inert gas atmosphere or an olefin gas atmosphere, and subsequently, after having been brought in contact with the solid catalyst component for polymerization of an olefin, one or more olefins such as propylene are contacted therewith.

In the pre-polymerization, the same olefin as in the main polymerization, or a monomer such as styrene can be used. The pre-polymerization conditions are also the same as the polymerization conditions described above.

The above pre-polymerization improves catalyst activity and facilitates further improving the stereoregularity, particle properties and the like of the polymer to be obtained.

Examples of the polymers obtained by the method for producing a polymer of an olefin according to the present invention include the polymer of an olefin according to the present invention and a propylene-based block copolymer according to the present invention, which will be described below.

The present invention can provide a method for producing a polymer of an olefin, which can easily produce the polymer of the olefin, which is excellent in fluidity and also is high in rigidity even though the molecular weight distribution is narrow, without performing complicated polymerization treatment.

Next, the polymer of an olefin according to the present invention will be described.

The polymer of an olefin according to the present invention has:
a melt flow rate (MFR) of 20 g/10 minutes or higher;
a molecular weight distribution (Mw/Mn) that is a ratio of a weight average molecular weight (Mw) to a number average molecular weight (Mn) of 4.0 to 7.0, and a molecular weight distribution (Mz/Mw) that is a ratio of a Z-average molecular weight (Mz) to the weight average molecular weight (Mw) of 2.0 to 7.0; and
a flexural modulus (FM) of 1800 MPa or higher.

The polymer of an olefin according to the present invention has a melt flow rate (MFR) of 20 g/10 minutes or higher, preferably 30 g/10 minutes or higher, and more preferably 50 g/10 minutes or higher.

The upper limit of the melt flow rate (MFR) of the polymer of an olefin according to the present invention is not particularly limited, and the melt flow rate (MFR) of the polymer of an olefin according to the present invention is usually 1000 g/10 minutes or lower.

With the polymer of an olefin according to the present invention having a melt flow rate (MFR) of 20 g/10 minutes or higher, excellent moldability can be easily exhibited.

Note that in the present application document, the melt flow rate (MFR) (g/10 minutes) means a value measured according to ASTM D 1238 and JIS K 7210.

The polymer of an olefin according to the present invention has a molecular weight distribution (Mw/Mn) that is the ratio of the weight average molecular weight (Mw) to the number average molecular weight (Mn) of 4.0 to 7.0, preferably 4.0 to 6.0, and more preferably 4.0 to 5.5.

The polymer of an olefin according to the present invention has a molecular weight distribution (Mz/Mw) that is the ratio of the Z-average molecular weight (Mz) to the weight average molecular weight (Mw) of 2.0 to 7.0, preferably 2.0 to 6.0, and more preferably 2.0 to 5.0.

With the polymer of an olefin according to the present invention having such relatively narrow molecular weight distribution with Mw/Mn and Mz/Mw within the above ranges, swell is unlikely to be caused when a polyolefin solution is extruded; and in a spinning process, for example, fiber products of various grades can be easily produced.

Note that in the present application document, the number average molecular weight (Mn), the weight average molecular weight (Mw), and the Z-average molecular weight (Mz) mean values which are obtained by measurement with the use of gel permeation chromatography (GPC) (GPC/V2000, manufactured by Waters Corporation) under the following conditions.
Solvent: o-dichlorobenzene (ODCB)
Temperature: 140°C (SEC)
Column: Shodex GPC UT-806M
Sample concentration: 1 g/ liter-ODCB (50 mg / 50 ml-ODCB)
Injection volume: 0.5 ml
Flow rate: 1.0 ml/min

The polymer of an olefin according to the present invention has a flexural modulus (FM) of 1800 MPa or higher, preferably 1850 MPa or higher, and more preferably 1900 MPa or higher.

The upper limit of the flexural modulus (FM) of the polymer of an olefin according to the present invention is not particularly limited, and the polymer of an olefin according to the present invention usually has a flexural modulus (FM) of 2100 MPa or lower.

With the polymer of an olefin according to the present invention having such relatively narrow molecular weight distribution with Mw/Mn and Mz/Mw within the above ranges but having a high flexural modulus (FM) of 1800 MPa or higher, excellent rigidity can be easily exhibited.

Note that in the present application document, the flexural modulus (FM) means a value which is measured according to JIS K 7171, by injection-molding a test piece for measurement of physical properties with the use of a polymer of an olefin to be measured, subjecting the test piece to conditioning in a thermostatic chamber which is controlled at 23°C, for 144 hours or longer, and then using a test piece on the surface of which exudation of a liquid or a powder is not observed.

The polymer of an olefin according to the present invention can be easily produced by the method for producing a polymer of an olefin according to the present invention.

According to the present invention, it is possible to provide a polymer of an olefin, which is excellent in fluidity and also is high in rigidity, even though the molecular weight distribution is narrow.

Next, the method for producing a propylene-based block copolymer according to the present invention will be described.

The method for producing the propylene-based block copolymer according to the present invention includes:
polymerizing an olefin containing 95 to 100% by mass of propylene using the catalyst for polymerization of an olefin according to the present invention to obtain a propylene-based polymer having a melt flow rate (MFR) of 20 g/10 minutes or higher, a molecular weight distribution (Mw/Mn) that is a ratio of a weight average molecular weight (Mw) to a number average molecular weight (Mn) of 4.0 to 7.0, a molecular weight distribution (Mz/Mw) that is a ratio of a Z-average molecular weight (Mz) to the weight average molecular weight (Mw) of 2.0 to 7.0, and a flexural modulus (FM) of 1800 MPa or higher, and
then polymerizing propylene and an α-olefin other than propylene, in the presence of the obtained propylene-based polymer.

The method for producing the propylene-based block copolymer according to the present invention corresponds to one embodiment of the aforementioned method for producing the polymer of an olefin according to the present invention; and the content is common to the content of the method for producing the polymer of an olefin according to the present invention described above, except for specifying using an olefin containing 95 to 100% by mass of propylene as a starting material to obtain a propylene-based polymer having the above characteristics as the polymer of an olefin that is an intermediate product, and then polymerizing propylene and an α-olefin other than propylene, in the presence of the obtained propylene-based polymer.

In the method for producing the propylene-based block copolymer according to the present invention, an olefin containing 95 to 100% by mass of propylene is used in a prestage step, an olefin containing 97 to 100% by mass of propylene is preferably used, and an olefin containing 99 to 100% by mass of propylene is more preferably used.

In the method for producing the propylene-based block copolymer according to the present invention, an olefin containing 95 to 100% by mass of propylene is used in the prestage step, and the propylene-based polymer having a melt flow rate (MFR) of 20 g/10 minutes or higher, a molecular weight distribution (Mw/Mn) that is the ratio of a weight average molecular weight (Mw) to the number average molecular weight (Mn) of 4.0 to 7.0, a molecular weight distribution (Mz/Mw) that is the ratio of a Z-average molecular weight (Mz) to the weight average molecular weight (Mw) of 2.0 to 7.0, and a flexural modulus (FM) of 1800 MPa or higher, is obtained as an intermediate product.

In the method for producing the propylene-based block copolymer according to the present invention, the details of the propylene-based polymer obtained as the intermediate product are as described in the description of the polymer of an olefin according to the present invention, except for specifying that the propylene-based polymer is formed from a polymer of an olefin containing 95 to 100% by mass of propylene.

In the method for producing a propylene-based block copolymer according to the present invention, in a poststage step, propylene and an α-olefin other than propylene are polymerized in the presence of the propylene-based polymer obtained as an intermediate product.

The α-olefin other than propylene is not particularly limited as long as the α-olefin is one or more compounds selected from α-olefins other than propylene, and examples thereof include ethylene, or ethylene and 1-butene.

In the method for producing the propylene-based block copolymer according to the present invention, polymerization treatment may be performed a plurality of times, in at least one of the prestage step of obtaining the propylene-based polymer as the intermediate product, using an olefin containing 95 to 100% by mass of propylene, and a poststage step of polymerizing propylene and the α-olefin other than propylene, in the presence of the obtained propylene-based polymer.

In the method for producing the propylene-based block copolymer according to the present invention, an olefin monomer such as propylene can be used in any state of gas or liquid, and the treatment in the above prestage step and the poststage step can be performed in the presence or absence of an organic solvent.

Specifically, in the prestage step, the monomer is polymerized in an amount corresponding to 20 to 90% by mass of the whole of the propylene-based block copolymer to be obtained, by adjusting the polymerization temperature and the polymerization time period, and then in the poststage step, propylene and ethylene or another α-olefin are introduced and polymerized while reaction conditions are adjusted so that the proportion of a rubber part such as an ethylene-propylene rubber (EPR) or an ethylene-propylene-1-butene ternary copolymer is 10 to 80% by mass of the whole of the propylene-based block copolymer to be obtained.

In general, the treatment in the above poststage step is preferably performed by a gas phase polymerization reaction, in order to inhibit dissolution of a rubber part such as EPR from polypropylene particles.

In addition, the treatment in the above prestage step and the poststage step may be carried out by any of a continuous polymerization or a batch polymerization.

Furthermore, the polymerization reaction in any treatment of the prestage and the poststage may be carried out in one stage or in multiple stages, and when each step is carried out in multiple stages, each step can be carried out under the same conditions or under different conditions.

The polymerization temperature in each of the above prestage step and the poststage step is preferably 200°C or lower, and more preferably 100°C or lower.

In addition, the polymerization pressures in the above prestage step and the poststage step are preferably 10 MPa or lower, and more preferably 5 MPa or lower.

Furthermore, the polymerization time period (residence time of the reacting raw materials) is suitably 1 minute to 5 hours in total of the polymerization time periods in the respective polymerization stages.

In the method for producing the propylene-based block copolymer according to the present invention, examples of an obtained propylene-based block copolymer include the propylene-based block copolymer according to the present invention, which will be described below.

According to the present invention, it is possible to easily produce a propylene-based block copolymer which is excellent in fluidity and also is high in rigidity even though the molecular weight distribution is narrow, without performing the complicated polymerization treatment.

Next, the propylene-based block copolymer according to the present invention will be described.

The propylene-based block copolymer according to the present invention is obtained by
polymerizing an olefin containing 95 to 100% by mass of propylene using the catalyst for polymerization of an olefin according to the present invention to obtain a propylene-based polymer having a melt flow rate (MFR) of 20 g/10 minutes or higher, a molecular weight distribution (Mw/Mn) that is a ratio of a weight average molecular weight (Mw) to a number average molecular weight (Mn) of 4.0 to 7.0, a molecular weight distribution (Mz/Mw) that is a ratio of a Z-average molecular weight (Mz) to the weight average molecular weight (Mw) of 2.0 to 7.0, and a flexural modulus (FM) of 1800 MPa or higher, and
then polymerizing propylene and an α-olefin other than propylene, in the presence of the obtained propylene-based polymer.

The propylene-based block copolymer according to the present invention corresponds to the aforementioned one embodiment of the polymer of an olefin according to the present invention.

In addition, the propylene-based block copolymer according to the present invention is defined by the expression according to the method for producing a block copolymer according to the present invention, and the details of the production method are as mentioned above.

In addition, the propylene-based block copolymer according to the present invention corresponds to one embodiment of the polymer of an olefin according to the present invention, and accordingly, the physical properties and the like thereof are common to those of the polymer of an olefin according to the present invention, and the details thereof are as described in the description of the polymer of an olefin according to the present invention.

According to the present invention, it is possible to provide a propylene-based block copolymer which is excellent in fluidity and also is high in rigidity, even though the molecular weight distribution is narrow.

### [Examples]

Next, the present invention will be described further specifically with reference to Examples. However, these examples are given merely for illustration and do not limit the present invention.

### (Example 1)

### <Preparation of solid catalyst component for polymerization of olefin>

Di-n-butyl phthalate, which is an aromatic carboxylic acid ester, and 2-isopropyl-2-isopentyl-1,3-dimethoxypropane, which is a 1,3-diether compound, were adopted as internal electron-donating compounds, and a solid catalyst component for polymerization of an olefin was prepared according to the following method.
(i) 10 g (87 millimoles) of diethoxymagnesium, 64 mL of toluene, 3.8 millimoles (1.1 g) of di-n-butyl phthalate, and 3.8 millimoles (0.8 g) of 2-isopropyl-2-isopentyl-1,3-dimethoxypropane were added to a flask having an internal volume of 500 mL purged with nitrogen gas and equipped with a stirring device to prepare a slurry suspension, and the slurry suspension was cooled to 5°C. To the slurry suspension was added 40 mL of titanium tetrachloride to give a first contact product.
(ii) The temperature of the above first contact product was raised, 1.9 millimoles (0.5 g) of di-n-butyl phthalate and 1.9 millimoles (0.4 g) of 2-isopropyl-2-isopentyl-1,3-dimethoxypropane were added at 60°C during the temperature rise, the temperature was further raised to 108°C, and the reaction was carried out for 60 minutes in a state in which the same temperature was kept. After the end of the reaction, a second contact product being a reaction product was washed four times with 125 mL of toluene at 105°C.
(iii) Next, 48 mL of titanium tetrachloride was newly added to the washed second contact product obtained above, at 80°C during the temperature rise, 2.5 millimoles (0.7 g) of di-n-butyl phthalate was added, and furthermore, the mixture was heated to 108°C and stirred for 60 minutes for reaction; and the obtained contact product was washed seven times with 125 mL of toluene at 105°C and then washed three times with 125 mL of n-heptane at 60°C, and subjected to solid-liquid separation to obtain the solid catalyst component for polymerization of an olefin.

The results of the component analysis of the obtained solid catalyst component for polymerization of an olefin are shown in Table 1.

Note that in Table 1, the aromatic carboxylic acid ester is represented by "(A)", and also the 1,3-diether compound is represented by "(B)".

### <Formation of catalyst for polymerization of olefin and formation of homopolymer of propylene>

1.32 millimoles of triethylaluminum, 0.13 millimoles of dicyclopentyl dimethoxysilane (DCPDMS) and 6.0 milligrams of the above solid catalyst component were charged into an autoclave equipped with a stirring device and having an internal volume of 2.0 liters purged with nitrogen gas, to thereby form a catalyst for polymerization of an olefin.

After that, 9.0 liters of hydrogen gas and 1.4 liters of liquefied propylene were charged; the mixture was subjected to preliminary polymerization at 20°C for 5 minutes, then was heated, and was subjected to a polymerization reaction at 70°C for 1 hour; and a homopolymer of propylene was obtained.

The obtained homopolymer of propylene was evaluated. The results are shown in Table 2.

### (Example 2)

A catalyst for polymerization was formed and propylene was polymerized with the use of 6.0 milligrams of the solid catalyst component obtained in Example 1, in the same way as in Example 1, except that 0.13 millimoles of dicyclopentyl dimethoxysilane (DCPDMS) was replaced by 0.13 millimoles of dicyclopentyl bis(ethylamino)silane (DCPEAS) and the amount of hydrogen gas charged was changed to 6.0 liters, and the obtained polymer was evaluated. The results are shown in Table 2.

### (Example 3)

### <Preparation of solid catalyst component for polymerization of olefin>

(i) 15 g (131 millimoles) of diethoxymagnesium, 64 mL of toluene, 5.7 millimoles (1.6 g) of di-n-butyl phthalate, and 5.7 millimoles (1.2 g) of 2-isopropyl-2-isopentyl-1,3-dimethoxypropane were added to a flask having an internal volume of 500 mL purged with nitrogen gas and equipped with a stirring device to prepare a slurry suspension, and the slurry suspension was cooled to 5°C. To the slurry suspension was added 40 mL of titanium tetrachloride to give a first contact product.
(ii) The temperature of the above first contact product was raised, 2.9 millimoles (0.8 g) of di-n-butyl phthalate and 2.9 millimoles (0.6 g) of 2-isopropyl-2-isopentyl-1,3-dimethoxypropane were added at 60°C during the temperature rise, the temperature was further raised to 108°C, and the reaction was carried out for 90 minutes in a state in which the same temperature was kept. After the end of the reaction, a second contact product being a reaction product was washed four times with 125 mL of toluene at 105°C.
(iii) Next, 48 mL of titanium tetrachloride was newly added to the washed second contact product obtained above, at 80°C during the temperature rise, 3.8 millimoles (1.0 g) of di-n-butyl phthalate was added, and furthermore, the mixture was heated to 108°C and stirred for 60 minutes for reaction; and then, the obtained contact product was washed seven times with 125 mL of toluene at 105°C and then washed three times with 125 mL of n-heptane at 60°C, and subjected to solid-liquid separation to obtain the solid catalyst component for polymerization of an olefin.

The results of the component analysis of the obtained solid catalyst component for polymerization of an olefin are shown in Table 1.

### <Formation of catalyst for polymerization of olefin and formation of homopolymer of propylene>

1.32 millimoles of triethylaluminum, 0.13 millimoles of dicyclopentyl dimethoxysilane (DCPDMS) and 6.0 milligrams of the above solid catalyst component were charged into an autoclave equipped with a stirring device and having an internal volume of 2.0 liters purged with nitrogen gas, to thereby form a catalyst for polymerization of an olefin.

After that, 9.0 liters of hydrogen gas and 1.4 liters of liquefied propylene were charged; the mixture was subjected to preliminary polymerization at 20°C for 5 minutes, then was heated, and was subjected to a polymerization reaction at 70°C for 1 hour; and a homopolymer of propylene was obtained.

The obtained homopolymer of propylene was evaluated. The results are shown in Table 2.

### (Example 4)

A catalyst for polymerization was formed and propylene was polymerized with the use of 6.0 milligrams of the solid catalyst component obtained in Example 3, in the same way as in Example 3, except that 0.13 millimoles of dicyclopentyl dimethoxysilane (DCPDMS) was replaced by 0.13 millimoles of diethylamino triethoxysilane (DEATES), and the obtained polymer was evaluated. The results are shown in Table 2.

### (Example 5)

### <Preparation of solid catalyst component for polymerization of olefin>

(i) 10 g (87 millimoles) of diethoxymagnesium, 84 mL of toluene, 4.6 millimoles (1.3 g) of di-n-butyl phthalate, and 4.6 millimoles (1.0 g) of 2-isopropyl-2-isopentyl-1,3-dimethoxypropane were added to a flask having an internal volume of 500 mL purged with nitrogen gas and equipped with a stirring device to prepare a slurry suspension, and the slurry suspension was cooled to 5°C. To the slurry suspension was added 20 mL of titanium tetrachloride to give a first contact product.
(ii) The temperature of the above first contact product was raised, 2.3 millimoles (0.6 g) of di-n-butyl phthalate and 2.3 millimoles (0.5 g) of 2-isopropyl-2-isopentyl-1,3-dimethoxypropane were added at 60°C during the temperature rise, the temperature was further raised to 108°C, and the reaction was carried out for 90 minutes in a state in which the same temperature was kept. After the end of the reaction, a second contact product being a reaction product was washed four times with 125 mL of toluene at 105°C.
(iii) Next, 48 mL of titanium tetrachloride was newly added to the washed second contact product obtained above, and the mixture was heated up to 108°C and stirred for 60 minutes for reaction; and then, the obtained contact product was washed eight times with 125 mL of toluene at 100°C and then washed three times with 125 mL of n-heptane at 60°C, and subjected to solid-liquid separation to obtain the solid catalyst component for polymerization of an olefin.

The results of the component analysis of the obtained solid catalyst component for polymerization of an olefin are shown in Table 1.

### <Formation of catalyst for polymerization of olefin and formation of homopolymer of propylene>

1.32 millimoles of triethylaluminum, 0.13 millimoles of dicyclopentyl dimethoxysilane (DCPDMS) and 6.0 milligrams of the above solid catalyst component were charged into an autoclave equipped with a stirring device and having an internal volume of 2.0 liters purged with nitrogen gas, to thereby form a catalyst for polymerization of an olefin.

After that, 9.0 liters of hydrogen gas and 1.4 liters of liquefied propylene were charged; the mixture was subjected to preliminary polymerization at 20°C for 5 minutes, then was heated, and was subjected to a polymerization reaction at 70°C for one hour; and a homopolymer of propylene was obtained.

The obtained homopolymer of propylene was evaluated. The results are shown in Table 2.

### (Example 6)

A catalyst for polymerization was formed and propylene was polymerized with the use of 4.0 milligrams of the solid catalyst component obtained in Example 5, in the same way as in Example 5, except that 0.13 millimoles of dicyclopentyl dimethoxysilane (DCPDMS) was replaced by 0.13 millimoles of diethylamino triethoxysilane (DEATES) and the amount of hydrogen gas charged was further changed to 6.0 liters, and the obtained polymer was evaluated. The results are shown in Table 2.

### (Example 7)

A catalyst for polymerization was formed and propylene was polymerized with the use of 4.0 milligrams of the solid catalyst component obtained in Example 5, in the same way as in Example 5, except that 0.13 millimoles of dicyclopentyl dimethoxysilane (DCPDMS) was replaced by 0.26 millimoles of dicyclopentyl bis(ethylamino)silane (DCPEAS) and the amount of hydrogen gas charged was further changed to 6.0 liters, and the obtained polymer was evaluated. The results are shown in Table 2.

### (Comparative Example 1)

### <Preparation of solid catalyst component for polymerization of olefin>

(i) 10 g (87 millimoles) of diethoxymagnesium, 84 mL of toluene, and 9.0 millimoles (2.5 g) of di-n-butyl phthalate were added to a flask having an internal volume of 500 mL purged with nitrogen gas and equipped with a stirring device to prepare a slurry suspension, and the slurry suspension was cooled to 5°C. To the slurry suspension was added 20 mL of titanium tetrachloride to give a first contact product.
(ii) The temperature of the above first contact product was raised, 4.5 millimoles (1.3 g) of di-n-butyl phthalate was added at 60°C during the temperature rise, and the temperature was further raised to 108°C, and the reaction was carried out for 90 minutes in a state in which the same temperature was kept. After the end of the reaction, a second contact product being a reaction product was washed four times with 125 mL of toluene at 105°C.
(iii) Next, 76 mL of toluene, 16 mL of titanium tetrachloride were newly added to the washed second contact product obtained above, and the mixture was heated up to 108°C and stirred for 60 minutes for reaction; and then, the obtained contact product was washed two times with 125 mL of toluene at 105°C.
(iv) Next, 75 mL of toluene was added, the temperature was raised, 5.0 millimoles (1.4 g) of di-n-butyl phthalate and 25 mL of titanium tetrachloride were added at 60°C; and the mixture was heated up to 90°C and stirred for 60 minutes for reaction.
(v) A supernatant liquid was extracted, and then, 75 mL of toluene and 25 mL of titanium tetrachloride were further added; and the mixture was heated up to 90°C and stirred for 60 minutes for reaction.
(vi) Next, the mixture was washed seven times with 125 mL of toluene at 105°C and then washed three times with 125 mL of n-heptane at 60°C, and subjected to solid-liquid separation to obtain the solid catalyst component for polymerization of an olefin.

The results of the component analysis of the obtained solid catalyst component for polymerization of an olefin are shown in Table 1.

### <Formation of catalyst for polymerization of olefin and formation of homopolymer of propylene>

1.32 millimoles of triethylaluminum, 0.13 millimoles of diethylamino triethoxysilane (DEATES) and 4.0 milligrams of the above solid catalyst component were charged into an autoclave equipped with a stirring device and having an internal volume of 2.0 liters purged with nitrogen gas, to thereby form a catalyst for polymerization of an olefin.

After that, 1.5 liters of hydrogen gas and 1.4 liters of liquefied propylene were charged; the mixture was subjected to preliminary polymerization at 20°C for 5 minutes, then was heated, and was subjected to a polymerization reaction at 70°C for 1 hour; and a homopolymer of propylene was obtained.

The obtained homopolymer of propylene was evaluated. The results are shown in Table 2.

### (Comparative Example 2)

A catalyst for polymerization was formed and propylene was polymerized in the same way as in Comparative Example 1, except that the amount of hydrogen gas charged in Comparative Example 1 was changed to 4.0 liters, and the obtained polymer was evaluated. The results are shown in Table 2.

### (Comparative Example 3)

### <Preparation of solid catalyst component for polymerization of olefin>

(i) 10 g (87 millimoles) of diethoxymagnesium, 84 mL of toluene, 6.8 millimoles (1.9 g) of di-n-butyl phthalate, and 0.8 millimoles (0.2 g) of 2-isopropyl-2-isopentyl-1,3-dimethoxypropane were added to a flask having an internal volume of 500 mL purged with nitrogen gas and equipped with a stirring device to prepare a slurry suspension, and the slurry suspension was cooled to 5°C. To the slurry suspension was added 20 mL of titanium tetrachloride to give a first contact product.
(ii) The temperature of the above first contact product was raised, 3.4 millimoles (0.9 g) of di-n-butyl phthalate and 0.4 millimoles (0.1 g) of 2-isopropyl-2-isopentyl-1,3-dimethoxypropane were added at 60°C during the temperature rise, the temperature was further raised to 108°C, and the reaction was carried out for 90 minutes in a state in which the same temperature was kept. After the end of the reaction, a second contact product being a reaction product was washed four times with 125 mL of toluene at 105°C.
(iii) Next, 48 mL of titanium tetrachloride was newly added to the washed second contact product obtained above, and the mixture was heated up to 108°C and stirred for 60 minutes for reaction; and then, the obtained contact product was washed seven times with 125 mL of toluene at 105°C and then washed three times with 125 mL of n-heptane at 60°C, and subjected to solid-liquid separation to obtain the solid catalyst component for polymerization of an olefin.

The results of the component analysis of the obtained solid catalyst component for polymerization of an olefin are shown in Table 1.

### <Formation of catalyst for polymerization of olefin and formation of homopolymer of propylene>

A catalyst for polymerization was formed and propylene was polymerized in the same way as in Comparative Example 2, except that 4.0 milligrams of the above solid catalyst component for polymerization of an olefin was used, and the obtained polymer was evaluated. The results are shown in Table 2.

### (Comparative Example 4)

### <Preparation of solid catalyst component for polymerization of olefin>

(i) 10 g (87 millimoles) of diethoxymagnesium, 84 mL of toluene, 5.3 millimoles (1.5 g) of di-n-butyl phthalate, and 2.3 millimoles (0.5 g) of 2-isopropyl-2-isopentyl-1,3-dimethoxypropane were added to a flask having an internal volume of 500 mL purged with nitrogen gas and equipped with a stirring device to prepare a slurry suspension, and the slurry suspension was cooled to 5°C. To the slurry suspension was added 20 mL of titanium tetrachloride to give a first contact product.
(ii) The temperature of the above first contact product was raised, 2.6 millimoles (0.7 g) of di-n-butyl phthalate and 1.1 millimoles (0.2 g) of 2-isopropyl-2-isopentyl-1,3-dimethoxypropane were added at 60°C during the temperature rise, the temperature was further raised to 108°C, and the reaction was carried out for 90 minutes in a state in which the same temperature was kept. After the end of the reaction, a second contact product being a reaction product was washed four times with 125 mL of toluene at 105°C.
(iii) Next, 48 mL of titanium tetrachloride was newly added to the washed second contact product obtained above, and the mixture was heated up to 108°C and stirred for 60 minutes for reaction; and then, the obtained contact product was washed seven times with 125 mL of toluene at 105°C and then washed three times with 125 mL of n-heptane at 60°C, and subjected to solid-liquid separation to obtain the solid catalyst component for polymerization of an olefin.

The results of the component analysis of the obtained solid catalyst component for polymerization of an olefin are shown in Table 1.

### <Formation of catalyst for polymerization of olefin and formation of homopolymer of propylene>

A catalyst for polymerization was formed and propylene was polymerized in the same way as in Comparative Example 2, except that 4.0 milligrams of the above solid catalyst component for polymerization of an olefin was used, and the obtained polymer was evaluated. The results are shown in Table 2.

### (Comparative Example 5)

### <Preparation of solid catalyst component for polymerization of olefin>

(i) 10 g (87 millimoles) of diethoxymagnesium, 84 mL of toluene, 2.7 millimoles (0.8 g) of di-n-butyl phthalate, and 6.4 millimoles (1.4 g) of 2-isopropyl-2-isopentyl-1,3-dimethoxypropane were added to a flask having an internal volume of 500 mL purged with nitrogen gas and equipped with a stirring device to prepare a slurry suspension, and the slurry suspension was cooled to 5°C. To the slurry suspension was added 20 mL of titanium tetrachloride to give a first contact product.
(ii) The temperature of the above first contact product was raised, 1.4 millimoles (0.4 g) of di-n-butyl phthalate and 3.2 millimoles (0.7 g) of 2-isopropyl-2-isopentyl-1,3-dimethoxypropane were added at 60°C during the temperature rise, the temperature was further raised to 108°C, and the reaction was carried out for 90 minutes in a state in which the same temperature was kept. After the end of the reaction, a second contact product being a reaction product was washed four times with 125 mL of toluene at 105°C.
(iii) Next, 48 mL of titanium tetrachloride was newly added to the washed second contact product obtained above, and the mixture was heated up to 108°C and stirred for 60 minutes for reaction; and then, the obtained contact product was washed eight times with 125 mL of toluene at 105°C and then washed three times with 125 mL of n-heptane at 60°C, and subjected to solid-liquid separation to obtain the solid catalyst component for polymerization of an olefin.

The results of the component analysis of the obtained solid catalyst component for polymerization of an olefin are shown in Table 1.

### <Formation of catalyst for polymerization of olefin and formation of homopolymer of propylene>

A catalyst for polymerization was formed and propylene was polymerized under the same conditions as in Example 1, except that 6.0 milligrams of the above solid catalyst component was used, and the obtained polymer was evaluated. The results are shown in Table 2.

### (Comparative Example 6)

### <Preparation of solid catalyst component for polymerization of olefin>

(i) 15 g (131 millimoles) of diethoxymagnesium, 64 mL of toluene, 1.1 millimoles (0.3 g) of di-n-butyl phthalate, and 10.2 millimoles (2.2 g) of 2-isopropyl-2-isopentyl-1,3-dimethoxypropane were added to a flask having an internal volume of 500 mL purged with nitrogen gas and equipped with a stirring device to prepare a slurry suspension, and the slurry suspension was cooled to 5°C. To the slurry suspension was added 40 mL of titanium tetrachloride to give a first contact product.
(ii) The temperature of the above first contact product was raised, 0.6 millimoles (0.2 g) of di-n-butyl phthalate and 5.1 millimoles (1.1 g) of 2-isopropyl-2-isopentyl-1,3-dimethoxypropane were added at 60°C during the temperature rise, the temperature was further raised to 108°C, and the reaction was carried out for 90 minutes in a state in which the same temperature was kept. After the end of the reaction, a second contact product being a reaction product was washed four times with 125 mL of toluene at 105°C.
(iii) Next, 48 mL of titanium tetrachloride was newly added to the washed second contact product obtained above, and the mixture was heated up to 108°C and stirred for 60 minutes for reaction; and then, the obtained contact product was washed seven times with 125 mL of toluene at 105°C and then washed three times with 125 mL of n-heptane at 60°C, and subjected to solid-liquid separation to obtain the solid catalyst component for polymerization of an olefin.

The results of the component analysis of the obtained solid catalyst component for polymerization of an olefin are shown in Table 1.

### <Formation of catalyst for polymerization of olefin and formation of homopolymer of propylene>

Polymerization was performed under the same conditions as in Example 1, except that 4.0 milligrams of the above solid catalyst component was used and the amount of hydrogen gas charged was changed to 4.0 liters, and the obtained homopolymer of propylene was evaluated. The results are shown in Table 2.

### (Comparative Example 7)

### <Preparation of solid catalyst component for polymerization of olefin>

(i) 10 g (87 millimoles) of diethoxymagnesium, 84 mL of toluene, and 7.6 millimoles (1.6 g) of 2-isopropyl-2-isopentyl-1,3-dimethoxypropane were added to a flask having an internal volume of 500 mL purged with nitrogen gas and equipped with a stirring device to prepare a slurry suspension, and the slurry suspension was cooled to 5°C. To the slurry suspension was added 20 mL of titanium tetrachloride to give a first contact product.
(ii) The temperature of the above first contact product was raised, 3.8 millimoles (0.8 g) of 2-isopropyl-2-isopentyl-1,3-dimethoxypropane was added at 60°C during the temperature rise, the temperature was further raised to 108°C, and the reaction was carried out for 90 minutes in a state in which the same temperature was kept. After the end of the reaction, a second contact product being a reaction product was washed four times with 125 mL of toluene at 105°C.
(iii) Next, 48 mL of titanium tetrachloride was newly added to the washed second contact product obtained above, and the mixture was heated up to 108°C and stirred for 60 minutes for reaction; and then, the obtained contact product was washed seven times with 125 mL of toluene at 105°C and then washed three times with 125 mL of n-heptane at 60°C, and subjected to solid-liquid separation to obtain the solid catalyst component for polymerization of an olefin.

The results of the component analysis of the obtained solid catalyst component for polymerization of an olefin are shown in Table 1.

### <Formation of catalyst for polymerization of olefin and formation of homopolymer of propylene>

A catalyst for polymerization was formed and propylene was polymerized under the same conditions as in Example 1, except that 6.0 milligrams of the above solid catalyst component was used and the amount of hydrogen gas charged was changed to 4.0 liters, and the obtained polymer was evaluated. The results are shown in Table 2.

**[Table 1]**

| | Composition of solid catalyst component for polymerization of olefin | | | | | | | |
|---|---|---|---|---|---|---|---|---|
| | Content (% by mass) | | | Content per 1.0 mole of Ti atoms (mole) | | Content ratio (molar ratio) | Content ratio (mass ratio) | Content ratio (mass ratio) |
| | Ti | (A) | (B) | (A) | (B) | (A):(B) | ((A)+(B))/Ti | (A)/Ti |
| Example 1 | 1.4 | 11.4 | 8.0 | 1.4 | 1.3 | 53:47 | 13.7 | 8.0 |
| Example 2 | | | | | | | | |
| Example 3 | 1.8 | 10.3 | 9.0 | 1.0 | 1.1 | 47:53 | 10.8 | 5.8 |
| Example 4 | | | | | | | | |
| Example 5 | 1.3 | 7.8 | 7.9 | 1.1 | 1.4 | 44:56 | 12.6 | 6.2 |
| Example 6 | | | | | | | | |
| Example 7 | | | | | | | | |
| Comparative Example 1 | 0.9 | 15.4 | 0.0 | 2.9 | 0.0 | 100:0 | 16.7 | 16.7 |
| Comparative Example 2 | | | | | | | | |
| Comparative Example 3 | 1.5 | 14.3 | 1.6 | 1.7 | 0.2 | 87:13 | 10.6 | 9.5 |
| Comparative Example 4 | 1.6 | 11.7 | 5.1 | 1.3 | 0.7 | 65:35 | 10.3 | 7.2 |
| Comparative Example 5 | 1.3 | 4.5 | 12.1 | 0.6 | 2.0 | 23:77 | 12.7 | 3.5 |
| Comparative Example 6 | 3.1 | 1.7 | 15.2 | 0.1 | 1.1 | 8:92 | 5.5 | 0.6 |
| Comparative Example 7 | 2.1 | 0.0 | 18.6 | 0 | 2.0 | 0:100 | 9.0 | 0.0 |

### <Description of abbreviations>

- Ti: titanium in solid catalyst component for polymerization of olefin
- (A): aromatic carboxylic acid ester in solid catalyst component for polymerization of olefin
- (B): 1,3-diether compound in solid catalyst component for polymerization of olefin

**[Table 2]**

| | Organosilicon compound | Melt flow rate: MFR (g/10 minutes) | Mw/Mn | Mz/Mw | Flexural modulus FM (MPa) |
|---|---|---|---|---|---|
| Example 1 | Dicyclopentyl dimethoxysilane | 160 | 4.9 | 3.1 | 1,940 |
| Example 2 | Dicyclopentyl bis(ethylamino)silane | 420 | 4.3 | 2.9 | 1,810 |
| Example 3 | Dicyclopentyl dimethoxysilane | 150 | 5.2 | 2.9 | 1,830 |
| Example 4 | Diethylamino triethoxysilane | 750 | 4.3 | 2.8 | 1,930 |
| Example 5 | Dicyclopentyl dimethoxysilane | 57 | 5.7 | 3.3 | 1,880 |
| Example 6 | Diethylamino triethoxysilane | 230 | 4.8 | 2.9 | 1,810 |
| Example 7 | Dicyclopentyl bis(ethylamino)silane | 330 | 4.9 | 3.0 | 1,830 |
| Comparative Example 1 | Diethylamino triethoxysilane | 21 | 5.2 | 3.0 | 1,640 |
| Comparative Example 2 | Diethylamino triethoxysilane | 120 | 4.6 | 2.8 | 1,720 |
| Comparative Example 3 | Diethylamino triethoxysilane | 120 | 5.1 | 3.1 | 1,720 |
| Comparative Example 4 | Diethylamino triethoxysilane | 110 | 4.5 | 2.9 | 1,750 |
| Comparative Example 5 | Dicyclopentyl dimethoxysilane | 280 | 4.6 | 3.0 | 1,780 |
| Comparative Example 6 | Dicyclopentyl dimethoxysilane | 120 | 5.1 | 2.7 | 1,670 |
| Comparative Example 7 | Dicyclopentyl dimethoxysilane | 120 | 4.3 | 2.7 | 1,680 |

It is understood from Table 1 and Table 2 that solid catalyst components for polymerization of an olefin obtained in Example 1 to Example 7 include magnesium and halogen, and also include titanium, an aromatic carboxylic acid ester and a 1,3-diether compound in predetermined amounts, respectively; and thereby can easily produce a polymer of an olefin which is excellent in fluidity and is also high in rigidity even though the molecular weight distribution is narrow, without performing complicated polymerization treatment.

On the other hand, it is understood from Table 1 and Table 2 that solid catalyst components for polymerization of an olefin obtained in Comparative Example 1 to Comparative Example 7 can produce only a polymer of an olefin, which is low in rigidity, because the content of the aromatic carboxylic acid ester or the 1,3-diether compound is out of the predetermined range.

### [Industrial Applicability]

The present invention can provide a solid catalyst component for polymerization of an olefin, which can easily produce a polymer of an olefin, which is excellent in fluidity and also is high in rigidity even though a molecular weight distribution is narrow, without performing complicated polymerization treatment; and can also provide a catalyst for polymerization of an olefin, a method for producing a polymer of an olefin, a polymer of an olefin, a method for producing a propylene-based block copolymer, and a propylene-based block copolymer.

## Claims

1. A solid catalyst component for polymerization of an olefin, comprising magnesium, titanium and halogen, and further comprising an aromatic carboxylic acid ester and a 1,3-diether compound as internal electron-donating compounds, wherein
a content ratio of the titanium is 0.5 to 2.0% by mass,
a content ratio of the aromatic carboxylic acid ester in a total content of the internal electron-donating compounds is 40 to 60 mol%, and
a content ratio of the 1,3-diether compound in the total content of the internal electron-donating compounds is 40 to 60 mol%.

2. The solid catalyst component for polymerization of an olefin according to claim 1, comprising the titanium, the aromatic carboxylic acid ester and the 1,3-diether compound so that a ratio represented by a total content of the aromatic carboxylic acid ester and the 1,3-diether compound / a content of the titanium is 2.0 or larger in terms of a mass ratio.

3. The solid catalyst component for polymerization of an olefin according to claim 1, comprising the titanium and the aromatic carboxylic acid ester so that a ratio represented by a content of the aromatic carboxylic acid ester / a content of the titanium is 1.5 or larger in terms of a mass ratio.

4. The solid catalyst component for polymerization of an olefin according to claim 1, comprising the titanium and the 1,3-diether compound so that a ratio represented by a content of the 1,3-diether compound / a content of the titanium is 1.5 or larger in terms of a mass ratio.

5. A catalyst for polymerization of an olefin, comprising: the solid catalyst component for polymerization of an olefin according to claim 1; and one or more organoaluminum compounds selected from the group consisting of compounds represented by the following general formula (I):
R¹ₚAlQ₃₋ₚ (I)
wherein R¹ represents an alkyl group having 1 to 6 carbon atoms, Q represents a hydrogen atom or a halogen atom, and p represents a real number of 0 < p ≤ 3.

6. The catalyst for polymerization of an olefin according to claim 5, further comprising an organosilicon compound.

7. A method for producing a polymer of an olefin, comprising polymerizing an olefin using the catalyst for polymerization of an olefin according to claim 5 or claim 6.

8. The method for producing a polymer of an olefin according to claim 7, wherein the polymerization of the olefin is homopolymerization of propylene, or copolymerization of propylene and an α-olefin other than propylene.

9. A polymer of an olefin, having:
a melt flow rate (MFR) of 20 g/10 minutes or higher;
a molecular weight distribution (Mw/Mn) that is a ratio of a weight average molecular weight (Mw) to a number average molecular weight (Mn) of 4.0 to 7.0, and a molecular weight distribution (Mz/Mw) that is a ratio of a Z-average molecular weight (Mz) to the weight average molecular weight (Mw) of 2.0 to 7.0; and
a flexural modulus (FM) of 1800 MPa or higher.

10. A method for producing a propylene-based block copolymer, comprising:
polymerizing an olefin containing 95 to 100% by mass of propylene using the catalyst for polymerization of an olefin according to any one of claim 5 to claim 7 to obtain a propylene-based polymer having a melt flow rate (MFR) of 20 g/10 minutes or higher, a molecular weight distribution (Mw/Mn) that is a ratio of a weight average molecular weight (Mw) to a number average molecular weight (Mn) of 4.0 to 7.0, a molecular weight distribution (Mz/Mw) that is a ratio of a Z-average molecular weight (Mz) to the weight average molecular weight (Mw) of 2.0 to 7.0, and a flexural modulus (FM) of 1800 MPa or higher; and
then polymerizing propylene and an α-olefin other than propylene, in the presence of the obtained propylene-based polymer.

11. A propylene-based block copolymer obtained by
polymerizing an olefin containing 95 to 100% by mass of propylene using the catalyst for polymerization of an olefin according to claim 5 or claim 6 to obtain a propylene-based polymer having a melt flow rate (MFR) of 20 g/10 minutes or higher, a molecular weight distribution (Mw/Mn) that is a ratio of a weight average molecular weight (Mw) to a number average molecular weight (Mn) of 4.0 to 7.0, a molecular weight distribution (Mz/Mw) that is a ratio of a Z-average molecular weight (Mz) to the weight average molecular weight (Mw) of 2.0 to 7.0, and a flexural modulus (FM) of 1800 MPa or higher, and
then polymerizing propylene and an α-olefin other than propylene, in the presence of the obtained propylene-based polymer.
